# EUROPÄISCHE PATENTSCHRIFT

(11) **EP 2 508 923 B1**
(45) Veröffentlichungstag und Bekanntmachung des Hinweises auf die Patenterteilung: **14.09.2016**
(21) Anmeldenummer: 12000634.1
(22) Anmeldetag: 01.02.2012
(51) Int. Cl.: G02B 6/00, B60Q 3/00, B60Q 3/02, B60Q 9/00, F21V 8/00

(54) **Leuchtvorrichtung für ein Kraftfahrzeug mit Lichtleitelementen**
Lighting device for a motor vehicle with light guiding elements
Dispositif d'éclairage pour un véhicule automobile doté d'éléments guidant la lumière

(30) Priorität: 04.04.2011 DE 102011016001
(43) Veröffentlichungstag der Anmeldung: 10.10.2012
(73) Patentinhaber: AUDI AG, 85045 Ingolstadt (DE)
(72) Erfinder: Reuschel, Jens Dietmar, 85053 Ingolstadt (DE); Schmitz, Christoph, 93326 Abensberg (DE)
(74) Vertreter: Thielmann, Frank

(56) Entgegenhaltungen:
- WO-A1-2004/052682
- WO-A1-2010/118795
- DE-A1- 19 822 636
- JP-A- 2009 170 325
- JP-U- 56 142 093
- US-A- 1 930 359
- US-A- 2 623 313
- US-A- 5 075 826
- US-A- 5 572 818

## Beschreibung

Die vorliegende Erfindung betrifft eine Leuchtvorrichtung für ein Kraftfahrzeug mit einer Lichtquelle und mit mehreren Lichtleitelementen.

Kraftfahrzeuge besitzen zur Ausleuchtung des Innenraums in der Regel mehrere Leuchten beziehungsweise Leuchtvorrichtungen. Meist handelt es sich dabei um Lämpchen, die an- oder abgeschaltet werden können. Sie dienen in der Regel nicht dazu, zusätzlich Information zu transportieren, die der Fahrzeuginsasse optisch wahrnehmen könnte.

Außerdem besitzen moderne Fahrzeuge zahlreiche Assistenzsysteme. Zum einen soll der Fahrer beim Führen des Fahrzeugs unterstützt werden (z. B. Spurassistent, Überholwarner, Abstandswarner etc.) und zum anderen können auch Beifahrer gewarnt werden (z. B. Warnung vor einem vorbeifahrenden Fahrrad beim Aussteigen). Diese Assistenzsysteme liefern meist optische Hinweise beziehungsweise Warnungen. Daher ist es wichtig, diese optischen Hinweise und Warnungen an Stellen zu geben, die sich in der Blickrichtung des Insassen befinden.

Aus der Druckschrift DE 103 59 156 B4 ist eine Anzeigevorrichtung mit einem Leuchtelement und einer lateral strukturierten Leuchtfläche mit zumindest einem leuchtfähigen Bereich und mit zumindest zwei zueinander beabstandeten lichtreflektierenden Schichten bekannt. Zwischen den lichtreflektierenden Schichten wird von der Leuchtfläche emittiertes Licht hin- und zurückreflektiert. Zumindest eine der lichtreflektierenden Schichten ist semitransparent. Eine der lichtreflektierenden Schichten wird in einem Abstand zum Leuchtelement angeordnet, sodass ein dreidimensionaler Eindruck der leuchtenden Strukturen der Leuchtfläche erreicht wird.

Darüber hinaus ist in der Druckschrift DE 10 2005 006 074 B4 ein dekorierter Spritzgussartikel mit einem spritzgegossenem Kunststoffkörper beschrieben, dessen Oberfläche bereichsweise mittels eines Inmold-Dekorations-Verfahrens mit einer Mehrschichtfolie bedeckt und verbunden ist. Der Spritzgussartikel weist gekrümmte Oberflächen auf, wobei die Mehrschichtfolie mindestens eine Replizierlackschicht aufweist, welche auf einer ihrer Oberflächen eine, einen visuell wahrnehmbaren und technischen Effekt erzeugende räumliche Struktur aufweist. An mindestens eine Oberfläche ist mit räumlicher Struktur angrenzend zumindest bereichsweise eine Kontrastschicht, die vorzugsweise als Reflexionsschicht ausgebildet ist, angeordnet.

Aus der US 5,075,826 A ist eine Leuchtvorrichtung für ein Kraftfahrzeug bekannt, bei der zwei transparente Platten in einer Rahmeneinrichtung gehalten sind. Die Rahmeneinrichtung weist entsprechende Leuchtmittel zum Beleuchten der Platten auf. Zusätzlich weisen die Platten entsprechende Aussparungen auf, an denen das Licht austreten kann.

Die Aufgabe der vorliegenden Erfindung besteht darin, ein Kraftfahrzeug mit einer Leuchtvorrichtung innen auszuleuchten, die bei Betrachtung eine hohe räumliche Tiefenwirkung ermöglicht.

Erfindungsgemäß wird diese Aufgabe gelöst durch eine Leuchtvorrichtung für ein Kraftfahrzeug umfassend
- eine Lichtquelle,
- mindestens zwei plattenförmige, zumindest bereichsweise lichtstreuende oder lichtbrechende Lichtleitelemente und
- eine Rahmeneinrichtung, die die mindestens zwei Lichtleitelemente so aneinander hält, dass ihre Mittelsenkrechten auf einer gemeinsamen Gerade liegen, und die die Lichtleitelemente an deren Rand zumindest teilweise umgibt, wobei
- die Rahmeneinrichtung Licht leitet und optisch an die Lichtquelle gekoppelt ist, und
- Licht von der Lichtquelle in die Rahmeneinrichtung und von der Rahmeneinrichtung in die Lichtleitelemente gekoppelt sowie aus den Lichtleitelementen nach außen geleitet wird, wobei
- die Rahmeneinrichtung im Wesentlichen oder vollständig aus einem Lichtleiter besteht.

In vorteilhafter Weise sind die mindestens zwei plattenförmigen, teiltransparenten Lichtleitelemente also parallel zueinander schichtweise übereinander gestapelt angeordnet. In alle Lichtleitelemente, d. h. in alle Schichten dieser Anordnung, wird Licht über die Rahmeneinrichtung eingekoppelt und von jedem der Lichtleitelemente an jeweils lichtstreuenden oder lichtbrechenden Bereichen aus dem Lichtleitelement ausgekoppelt. Durch die Schichtung ergibt sich dann im beleuchteten Zustand der Leuchtvorrichtung eine räumliche Tiefenwirkung.

Dadurch, dass die Rahmeneinrichtung die Lichtleitelemente hält, steht sie ohnehin mit diesen in Kontakt. Dieser unmittelbare Kontakt wird nun genutzt, um Licht von der Rahmeneinrichtung in die jeweiligen Lichtleiter einzukoppeln. Das Einkoppeln ist umso effizienter, je weiter die Rahmeneinrichtung die Lichtleitelemente umfasst. Damit besitzt die Rahmeneinrichtung also die doppelte Funktionalität des Haltens der Lichtleitelemente und des Einkoppelns von Licht in diese Lichtleitelemente.

Vorzugsweise besitzt die Rahmeneinrichtung Schienenabschnitte, in die die Lichtleitelemente einschiebbar sind. Hierdurch können mehrere Lichtleitelemente auf einfache Weise in der Rahmeneinrichtung montiert werden.

Gemäß einer Ausführungsform weist jedes der Lichtleitelemente eine transparente Platte auf, in die mindestens ein Strukturelement eingearbeitet ist, an dem Licht streut oder bricht, welches in die Platte eingekoppelt wurde. Es wird also Licht, das über die Rahmeneinrichtung in den Rand jeder Platte eingekoppelt wurde, nur an den speziell eingearbeiteten Strukturelementen ausgekoppelt. Damit erscheinen nur die Strukturelemente als Leuchtelemente der jeweiligen transparenten Platte beziehungsweise des jeweiligen Lichtleitelements.

Dabei ist es ebenfalls vorteilhaft, wenn jedes der Lichtleitelemente mindestens ein anders geformtes oder anders platziertes Strukturelement zum Streuen oder Brechen des Lichts aufweist als alle anderen Lichtleitelemente. Wird somit die Leuchtvorrichtung von der Oberseite der plattenförmigen Lichtleitelemente parallel zu der gemeinsamen Mittelsenkrechte der Lichtleitelemente betrachtet, so sind die einzelnen Strukturelemente aller Platten zu erkennen, da sie nicht in Beobachtungsrichtung hintereinander liegen.

Jedes der Lichtleitelemente kann außerdem mehrere lineare Strukturelemente aufweisen, an denen Licht streut oder bricht, das in das Lichtleitelement eingekoppelt wurde. So können die transparenten Platten beispielsweise längliche Einfräsungen als lineare Strukturelemente besitzen. Aufgrund der gefrästen Oberfläche würden dann nur die linearen Strukturelemente leuchten beziehungsweise das Licht aus der Platte auskoppeln.

Die linearen Strukturelemente können Stäbe aus einem lichtleitenden Material sein. Es bilden dann mehrere Stäbe, die gleichmäßig oder ungleichmäßig angeordnet sein können, und die von einem Halterahmen gehalten werden, ein plattenförmiges Lichtleitelement. Das Lichtleitelement besitzt dann entsprechende Durchbrüche zwischen den einzelnen Stäben.

Weiterhin ist es vorteilhaft, wenn in den größten Teil des äußeren Rands jedes Lichtleitelements Licht von der Rahmeneinrichtung eingekoppelt und das Licht hauptsächlich an den Strukturelementen ausgekoppelt wird. Dies hat den Vorteil, dass bei eingeschalteter Leuchtvorrichtung im Wesentlichen nur die Strukturelemente leuchten, während die übrigen Bereiche der Lichtleitelemente nicht oder weniger stark leuchten.

Ferner ist es besonders vorteilhaft, wenn ein (Fahrer)-Assistenzsystem mit der oben beschriebenen Leuchtvorrichtung ausgestattet ist, wobei die Leuchtvorrichtung zur optischen Warnung oder Informationsmitteilung dient. Es wird also von der Leuchtvorrichtung ein optischer Hinweis generiert, der für den Fahrer oder einen Insassen genutzt werden kann. Auf diese Weise lässt sich beispielsweise die ansonsten für Informationen ungenutzte Fläche einer Türverkleidung oder Mittelkonsole für optische Hinweise in einem Kraftfahrzeug nutzen.

Die vorliegende Erfindung wird nun anhand der beigefügten Zeichnungen näher erläutert, in denen zeigen:
- Fig. 1: eine Ansicht einer Ausführungsform einer erfindungsgemäßen Leuchtvorrichtu ng;
- Fig. 2: eine parallele Anordnung mehrerer lichtleitender Platten der Leuchtvorrichtung von Fig. 1;
- Fig. 3: eine alternative Ausführungsform eines Lichtleitelements mit lichtleitenden Stäben;
- Fig. 4: einen Querschnitt durch eine Rahmeneinrichtung und
- Fig. 5: ein Lichtleitelement mit einer transparenten Platte und eingearbeiteten Strukturelementen.

Die nachfolgend näher geschilderten Ausführungsbeispiele stellen bevorzugte Ausführungsformen der vorliegenden Erfindung dar.

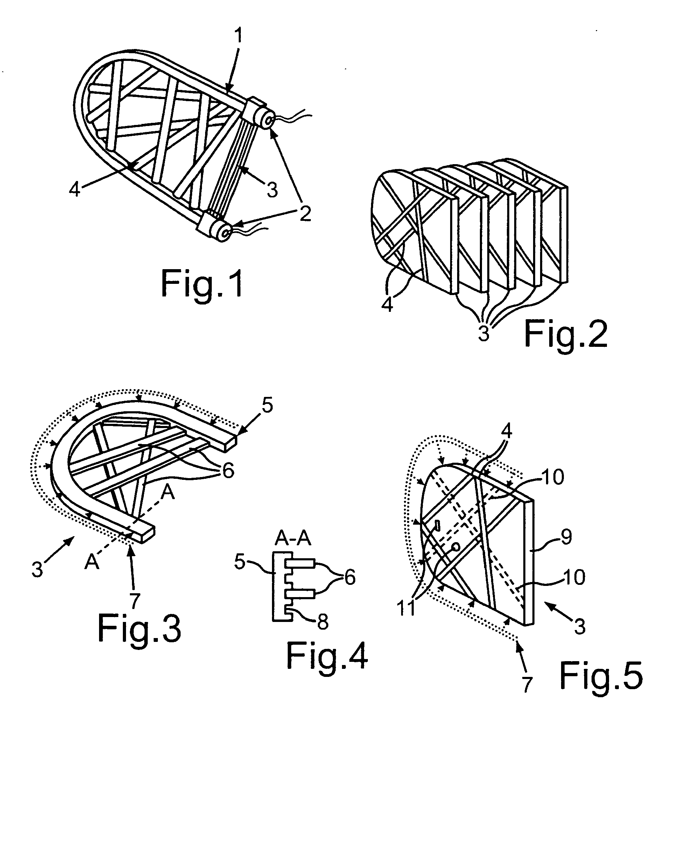

Ein Kraftfahrzeug weist beispielsweise eine Türverkleidung oder Mittelkonsole auf, in die eine Lichtvorrichtung gemäß dem Beispiel von Fig. 1 eingebracht sein kann. Die Leuchtvorrichtung besitzt eine Rahmeneinrichtung 1, die hier im Wesentlichen U-förmige Gestalt besitzt. Sie besteht aus einem lichtleitenden Material (z. B. PMMA = Polymethylmethacrylat). An den Stirnseiten der Schenkel der Rahmeneinrichtung 1 (d. h. an den freien Enden) befinden sich hier jeweils eine Lichtquelle 2. Als Lichtquelle kann beispielsweise eine Glühlampe oder eine LED verwendet werden. Das Licht der Lichtquellen 2 wird also auf übliche Weise in die Rahmeneinrichtung 1 eingekoppelt. Grundsätzlich genügt auch eine einzige Lichtquelle 2, um Licht in die Rahmeneinrichtung 1 einzukoppeln.

In nicht erfindungsgemäßen Alternative ist ein Rahmen vorgesehen, der selbst nicht lichtleitend ist. Der Rahmen beinhaltet dann einen Lichtleiter, der innerhalb des Rahmens verläuft. Die Rahmeneinrichtung besteht in diesem Fall aus einem Rahmenelement, das rein mechanische Funktion besitzt und einem Lichtleiter, der die Lichtleitefunktion besitzt.

Von der Rahmeneinrichtung 1 werden mehrere parallel angeordnete Lichtleitelemente, die jeweils plattenförmige Gestalt besitzen, gehalten. Im vorliegenden Beispiel besitzt jedes Lichtleitelement 3 die Kontur der Innenfläche eines U. Jedes plattenförmige Lichtleitelement 3 besitzt eine Mittelsenkrechte und die Mittelsenkrechten aller plattenförmigen Lichtleitelemente 3 liegen auf einer Geraden.

Die einzelnen lichtleitenden Platten der Lichtleitelemente 3 sind also, wie in Fig. 2 angedeutet ist, nebeneinander angeordnet. Im zusammengesetzten Zustand berühren sich die einzelnen Lichtleitelemente 3 oder aber es befindet sich zwischen ihnen ein geringer Abstand. Aus einer Sicht senkrecht zu den Plattenoberflächen der einzelnen Lichtleitelemente liegen diese unmittelbar hintereinander.

Jedes der Lichtleitelemente 3 besitzt ein oder mehrere Strukturelemente 4. Im vorliegenden Fall handelt es sich bei den Strukturelementen um streifenförmige beziehungsweise lineare Gebilde. Die Strukturelemente 4 verlaufen in beliebigen Winkeln über die jeweilige Platte beziehungsweise das jeweilige Lichtleitelement 3. Die Strukturelemente 4 können beispielsweise durch Fräsen, Lasern oder Sandstrahlen in die jeweilige transparente Platte eingebracht werden. Die Oberfläche der transparenten Platte wird dadurch angeraut, sodass Licht, das an dieser angerauten Fläche ankommt, gestreut beziehungsweise gebrochen wird.

Im eingeschalteten Zustand der Leuchtvorrichtung wird also Licht von der Rahmeneinrichtung 1 beziehungsweise dem darin integrierten Lichtleiter in den Rand der plattenförmigen Lichtleitelemente 3 eingekoppelt. Das Einkoppeln erfolgt vorzugsweise an einem Grossteil des Gesamtumfangs der Lichtleitelemente 3. Das Licht wird innerhalb der Platten in der Regel durch Totalreflexion weitergeleitet. Stößt es auf ein Strukturelement, so findet hier keine Totalreflexion statt und das Licht wird aus der jeweiligen Platte beziehungsweise dem jeweiligen Lichtleitelement 3 ausgekoppelt. Die Auskopplung erfolgt zu einem großen Anteil in einem so steilen Winkel, dass die benachbarten transparenten Platten von diesem Licht ohne weitere Totalreflexion durchschienen werden. Das Licht der leuchtenden Strukturelemente von den äußersten Platten wird unmittelbar nach außen, d. h. den Fahrzeuginnenraum abgestrahlt.

Von der Leuchtvorrichtung leuchten also im eingeschalteten Zustand in erster Linie die streuenden beziehungsweise brechenden Strukturelemente 4. Von der Oberseite, d. h. entlang der Flächennormalen, her betrachtet sind sämtliche leuchtenden Strukturelemente 4 aller Lichtleitelemente 3 zu erkennen. Da sie wegen ihrer Schichtung in unterschiedlichen Ebenen liegen, entsteht eine räumliche Tiefenwirkung (3D-Wirkung).

In dem obigen Beispiel liegen fünf Schichten (plattenförmige Lichtleitelemente 3) übereinander. Eine alternative Anordnung kann aber auch aus einer anderen Anzahl an Lichtleitelementen beziehungsweise Schichten bestehen. Mindestens sollen jedoch zwei derartige Schichten vorgesehen sein.

Die Strukturelemente 4, die das Licht streuen beziehungsweise brechen sind hier nicht symmetrisch angeordnet. Sie liegen in verschiedenen Winkeln übereinander. Bei anderen Ausführungsformen können die Strukturelemente für sich eine andere Form besitzen. Beispielsweise können sie dünner oder dicker sein. Sie können innerhalb eines Lichtleitelements auch unterschiedliche Dicke besitzen. Die Strukturelemente 4 müssen auch nicht an einer Stelle des Rahmens beginnen und an einer anderen Stelle des Rahmens enden. Vielmehr können sie auch vollständig im Inneren einer jeweiligen Platte liegen. Des weiteren können die Strukturelemente auch andere Geometrien als eine lineare Geometrie besitzen. So können sie beliebige Kurvenformen aufweisen. Auch können die Strukturelemente als Punkte, Grafiken, Ornamente und dergleichen realisiert sein.

In Fig. 3 ist eine spezielle Art eines Lichtleitelements dargestellt. Es besitzt einen Halterahmen 5, der hier ebenfalls U-förmige beziehungsweise hufeisenförmige Gestalt besitzt. Im Inneren des Hufeisens verlaufen mehrere Stäbe 6. Diese Stäbe 6 bestehen vorzugsweise aus einem teiltransparenten Material oder sie sind im Kern volltransparent und ihre Oberfläche ist angeraut, sodass sie vermehrt Licht nach außen strahlen und in ihrem Inneren weniger Totalreflexion auftritt.

Der Halterahmen 5 besteht hier aus einem volltransparenten, lichtleitenden Material. Er koppelt Licht in die Stirnseiten der Stäbe 6 ein. Von außen wird das Licht 7, wie dies in Fig. 3 symbolisch angedeutet ist, von der Rahmeneinrichtung 1, die in Fig. 3 nicht dargestellt ist, eingekoppelt.

Das plattenförmige Lichtleitelement 3 wird hier also nicht durch eine Platte aus einem Vollmaterial gebildet, sondern aus einem transparenten Halterahmen 5 mit darin eingespannten Stäben 6. Es entsteht damit ein plattenförmiges Gebilde mit Durchbrüchen.

In Fig. 4 ist angedeutet, wie der Halterahmen 5 im Querschnitt aussehen kann. Er besitzt hier mehrere nach innen gerichtete Nuten 8, in die die Stäbe 6 eingesteckt sind. Somit kann das Licht effektiv von dem Halterahmen 5 in die Stirnseiten der einzelnen Stäbe 6 eingekoppelt werden.

In Fig. 5 ist ein weiteres Beispiel eines teiltransparenten Lichtleitelements plattenförmiger Gestalt wiedergegeben. Wie in den Beispielen von Fig. 1 und Fig. 2 besitzt das Lichtleitelement 3 hier ähnliche lineare Strukturelemente 4, die auf der Oberseite der transparenten Platte 9 verlaufen. Darüber hinaus besitzt die transparente Platte 9 hier aber auch lichtstreuende Strukturelemente 10 an der gegenüberliegenden Unterseite. Da die Platte 9 eine gewisse Dicke aufweist, entsteht bereits durch die Strukturelemente 4 und 10 auf der Unterseite und der Oberseite der Platte eine räumliche Tiefenwirkung, wenn die Strukturelemente leuchten.

Das Leuchten der Strukturelemente 4, 10 wird hier ebenfalls dadurch erreicht, dass Licht 7 in den Rand der Platte 9 eingekoppelt wird. Das Einkoppeln erfolgt wie in dem Beispiel von Fig. 1 mittels der Rahmeneinrichtung 1 mit den Lichtquellen 2.

Ergänzend ist in Fig. 5 eingezeichnet, dass die transparente Platte 9 auch anders geformte Strukturelemente 11 aufweisen kann.

Mit der vorliegenden Erfindung ist es somit möglich, eine Leuchtvorrichtung als eigenständiges Modul bereitzustellen, das nicht ein integriertes Mehrschichtsystem bildet, sondern das mehrere teiltransparente Schichten aufweist, welche sich vorzugsweise nicht berühren und in einem gewissen Abstand nebeneinander liegen. Durch die einzelnen Schichten, in die über einen Lichtleiter Licht eingekoppelt wird, lässt sich eine dreidimensionale Gestalt realisieren, indem Fräs-, Ätz-, Schleif- oder andere mechanisch erhaltene Strukturen in den einzelnen Schichten verstärkt leuchten. Die durch die mechanischen Behandlungen erzeugten Verletzungen in den Schichten bewirken, dass Licht ausgekoppelt wird. Es ergibt sich somit ein visueller Effekt, der von dem echten, dreidimensionalen Aufbau der Leuchtvorrichtung herrührt. Daher sind die einzelnen Schichten optisch voneinander unabhängig und können mit unterschiedlichem Licht beschickt werden. Wegen der Lichtleiter ist außerdem ein hohes Maß an Energieeffizienz möglich, sodass insbesondere auch ein Einsatz bei Elektrofahrzeugen in Betracht kommt.

In einem Kraftfahrzeug können unterschiedliche Komponenten im Innenraum mit einer derartigen Leuchtvorrichtung ausgestattet werden. Insbesondere kann, wie oben bereits angedeutet wurde, eine Türverkleidung mit einer solchen Leuchtvorrichtung ausgestattet werden. Hier oder auch an anderen Stellen lässt sich die Leuchtvorrichtung dann auch für eine Warnfunktion einsetzen.

Die Warnfunktion kann allgemein dadurch realisiert werden, dass eine Steuervorrichtung ein Signal überprüft. Erfüllt das Signal eine vorgegebene Bedingung, so steuert die Steuervorrichtung eine dafür vorgesehene Leuchtvorrichtung an. Die Leuchtvorrichtung besitzt den Aufbau, wie er oben geschildert wurde.

Wamfunktionen sind, wie oben bereits angedeutet wurde, insbesondere für Fahrerassistenzsysteme hilfreich. So kann die obige Leuchtvorrichtung beispielsweise für einen "Abstandswarner" eingesetzt werden. Der "Abstandswarner" kontrolliert ständig, ob ein bestimmter Abstand zum Vordermann eingehalten wird. Die Kontrolle erfolgt beispielsweise mittels Radar. Wird ein Mindestabstand unterschritten, so muss der Fahrer in geeigneter Weise gewarnt werden. Dies kann hier beispielsweise mittels der geschilderten Leuchtvorrichtung unterhalb der Windschutzscheibe, am Armaturenbrett oder dergleichen erfolgen.

Die erfindungsgemäße Leuchtvorrichtung kann auch für ein Fahrerassistenzsystem "Überholwarner" genutzt werden. Dabei tastet beispielsweise ein Radarstrahl den hinteren Bereich eines Kraftfahrzeugs ab. Wird ein überholendes Fahrzeug festgestellt und hat das eigene Fahrzeug den Blinker auf die Spur des überholenden Fahrzeugs gesetzt oder wird ein Lenkwinkel des eigenen Fahrzeugs in Richtung auf die Spur des überholenden Fahrzeugs registriert, so kann eine entsprechende Überholwarnung optisch abgegeben werden. Dies erfolgt beispielsweise dadurch, dass ein Lauflicht an der Innenseite der Tür an der Seite des überholenden Fahrzeugs einen Überholvorgang andeutet. Beispielsweise kann dies durch ein rotes Lauflicht erfolgen, das sich in Fahrtrichtung nach vorne bewegt.

Eine weitere Anwendungsmöglichkeit der erfindungsgemäßen Leuchtvorrichtung bei einem Fahrerassistenzsystem wäre der Einsatz bei einem "Ausstiegsassistenten". Hält das Fahrzeug beispielsweise neben einem Fahrradweg an, und ein Insasse will aussteigen, so kann mit einer entsprechenden Beleuchtung der Tür angezeigt werden, ob ein gefahrloses Öffnen der Tür möglich ist oder nicht. Wenn keine Gefahr besteht, so kann die Tür beispielsweise innen grün beleuchtet werden, während sie bei Gefahr, d. h. beispielsweise bei einem sich nähernden oder bei einem vorbeifahrenden Fahrrad, rot leuchtet.

Auch andere Fahrerassistenzsysteme können mit der erfindungsgemäßen Leuchtvorrichtung ausgestattet werden. Dabei kann die Leuchtvorrichtung in der Fläche sehr groß ausgebildet sein, da sie bei Nichtgebrauch ein hochwertiges Dekorelement darstellt.

## Patentansprüche

1. Leuchtvorrichtung für ein Kraftfahrzeug mit
- einer Lichtquelle (2),
- mindestens zwei plattenförmigen, zumindest bereichsweise lichtstreuende oder lichtbrechende Lichtleitelementen (3) und
- einer Rahmeneinrichtung (1), die die mindestens zwei Lichtleitelemente (3) so aneinander hält, dass ihre Mittelsenkrechten auf einer gemeinsamen Geraden liegen, und die die Lichtleitelemente (3) an deren Rand zumindest teilweise umgibt, wobei
- die Rahmeneinrichtung (1) Licht leitet und optisch an die Lichtquelle (2) gekoppelt ist, und
- Licht von der Lichtquelle (2) in die Rahmeneinrichtung (1) und von der Rahmeneinrichtung (1) in die Lichtleitelemente (3) gekoppelt sowie aus den Lichtleitelementen (3) nach außen geleitet wird,
**dadurch gekennzeichnet, dass**
- die Rahmeneinrichtung (1) im Wesentlichen oder vollständig aus einem Lichtleiter besteht.

2. Leuchtvorrichtung nach Anspruch 1, wobei die Rahmeneinrichtung (1) Schienenabschnitte (8) aufweist, in die die Lichtleitelemente (3) einschiebbar sind.

3. Leuchtvorrichtung nach einem der vorhergehenden Ansprüche, wobei jedes der Lichtleitelemente (3) eine transparente Platte (9) aufweist, in die mindestens ein Strukturelement (4, 6) eingearbeitet ist, an dem Licht streut oder bricht, welches in die Platte (9) eingekoppelt wurde.

4. Leuchtvorrichtung nach Anspruch 3, wobei jedes der Lichtleitelemente (3) mindestens ein anders geformtes oder anders platziertes Strukturelement (4) zum Streuen oder Brechen des Lichts aufweist als alle anderen Lichtleitelemente.

5. Leuchtvorrichtung nach einem der vorhergehenden Ansprüche, wobei jedes der Lichtleitelemente (3) mehrere lineare Strukturelemente (4, 6) aufweist, an denen Licht streut oder bricht, das in das Lichtleitelement eingekoppelt wurde.

6. Leuchtvorrichtung nach Anspruch 5, wobei die linearen Strukturelemente Stäbe (6) aus einem lichtleitenden Material sind, die in einem transparenten Halterahmen (5) eingespannt sind..

7. Leuchtvorrichtung nach einem der Ansprüche 3 bis 6, wobei in den größten Teil des äußeren Rands jedes Lichtleitelements (3) Licht von der Rahmeneinrichtung (1) eingekoppelt und das Licht hauptsächlich an den Strukturelementen (4, 6) ausgekoppelt wird.

8. Assistenzsystem für ein Kraftfahrzeug, mit einer Leuchtvorrichtung nach einem der vorhergehenden Ansprüche, wobei die Leuchtvorrichtung zur optischen Warnung oder Informationsmitteilung dient.

9. Kraftfahrzeug mit einem Assistenzsystem nach Anspruch 8.

## Claims

1. Lighting device for a motor vehicle, having
- a light source (2),
- at least two plate-shaped light guide elements (3) that scatter light or refract light at least in regions, and
- a framework (1) holding the at least two light guide elements (3) together such that their perpendicular bisectors lie on a common straight line, the framework at least partly surrounding the light guide elements (3) at their boundary, wherein
- the framework (1) guides light and is coupled optically to the light source (2), and
- light from the light source (2) is coupled into the framework (1), and from the framework (1) into the light guide elements (3), and is guided from the light guide elements (3) outwards,
**characterised in that**
- the framework (1) consists substantially or entirely of a light guide.

2. Lighting device according to claim 1, wherein the framework (1) has rail sections (8) into which the light guide elements (3) are able to be slid.

3. Lighting device according to one of the preceding claims, wherein each of the light guide elements (3) has a transparent plate (9) into which at least one structural element (4, 6) is integrated, at which light that has been coupled into the plate (9) scatters or refracts.

4. Lighting device according to claim 3, wherein each of the light guide elements (3) has at least one structural element (4) to scatter or refract light that is shaped differently or positioned differently to all other light guide elements.

5. Lighting device according to one of the preceding claims, wherein each of the light guide elements (3) has several linear structural elements (4, 6) at which light that has been coupled into the light guide element scatters or refracts.

6. Lighting device according to claim 5, wherein the linear structural elements are rods (6) made from light-conducting material, the rods being clamped in a transparent holding frame (5).

7. Lighting device according to one of claims 3 to 6, wherein light is coupled from the framework (1) into the largest part of the outer boundary of each light guide element (3), and the light is decoupled predominantly at the structural elements (4, 6).

8. Assistance system for a motor vehicle, having a lighting device according to one of the preceding claims, wherein the lighting device serves for optical warning or to provide information.

9. Motor vehicle having an assistance system according to claim 8.

## Revendications

1. Dispositif d'éclairage pour un véhicule comprenant :
- une source de lumière (2),
- au moins deux éléments de guidage de la lumière (3) en forme de plaque ayant au moins des zones qui diffusent ou réfractent la lumière, et
- une structure (1) maintenant au moins les deux éléments de guidage de la lumière (3) de telle sorte que leurs médiatrices s'étendent suivant une ligne droite commune, ladite structure étant configurée pour entourer au moins partiellement une bordure des éléments de guidage de la lumière (3), dans lequel
- la structure (1) guide la lumière et est couplée optiquement à la source de lumière (2), et
- la lumière étant projetée depuis la source de lumière (2) vers la structure (1) et depuis la structure (1) vers les éléments de guidage de la lumière (3) de sorte que la lumière est guidée depuis les éléments de guidage de la lumière (3) vers l'extérieur,
**caractérisé en ce que** la structure (1) consiste substantiellement ou en totalité en un élément de guidage de la lumière.

2. Dispositif d'éclairage selon la revendication 1, dans lequel la structure (1) comprend des rails (8) dans lesquels les éléments de guidage de la lumière (3) sont montés coulissant.

3. Dispositif d'éclairage selon l'une des revendications précédentes, dans lequel chacun des éléments de guidage de la lumière (3) inclut une plaque transparente (9) dans laquelle au moins un élément structurel (4, 6) est intégré pour diffuser ou dévier la lumière ledit élément structurel étant couplé à la plaque (9).

4. Dispositif d'éclairage selon la revendication 3, dans lequel chacun des éléments de guidage de la lumière (3) inclut au moins un élément structurel (4), destiné à projeter ou à réfracter la lumière, qui présente une forme différente ou est placé à un endroit différent que les autres éléments de guidage de la lumière.

5. Dispositif d'éclairage selon l'une des revendications précédentes, dans lequel chacun des éléments de guidage de la lumière (3) présente plusieurs éléments structurels linéaires (4, 6) sur lesquels la lumière projetée sur l'élément de guidage de la lumière est diffusée ou déviée.

6. Dispositif d'éclairage selon la revendication 5, dans lequel les éléments structurels linéaires sont configurés pour former des barres (6), en un matériau guidant la lumière, qui sont intégrées dans un cadre de maintien (5) transparent.

7. Dispositif d'éclairage selon l'une des revendications 3 à 6, dans lequel la structure (1) est agencée pour projeter la lumière dans la majeure partie d'une bordure extérieure de chacun des éléments de guidage de la lumière (3), la lumière étant projetée principalement des éléments structurels (4, 6).

8. Système d'assistance pour un véhicule, comportant un dispositif d'éclairage selon l'une des revendications précédentes, dans lequel le dispositif d'éclairage sert en tant qu'avertisseur optique ou en tant que moyen d'information.

9. Véhicule automobile avec un système d'assistance selon la revendication 8.
